# EUROPÄISCHE PATENTSCHRIFT

(11) **EP 1 854 827 B1**
(45) Veröffentlichungstag und Bekanntmachung des Hinweises auf die Patenterteilung: **29.04.2015**
(21) Anmeldenummer: 07107978.4
(22) Anmeldetag: 10.05.2007
(51) Int. Cl.: C08G 73/06, C08L 79/04

(54) **Flammfeste, niedrigtemperaturhärtende, cyanatbasierte Harze mit verbesserten Eigenschaften**
Flame resistant, low-temperature curing cyanate resin having improved properties
Résine cyanate ignifuge durcissant à basse température avec des propriétés améliorées

(30) Priorität: 11.05.2006 DE 102006022058; 01.09.2006 DE 102006041037; 22.12.2006 DE 102006062248
(43) Veröffentlichungstag der Anmeldung: 14.11.2007
(73) Patentinhaber: Fraunhofer-Gesellschaft zur Förderung der angewandten Forschung e.V., 80686 München (DE)
(72) Erfinder: Bauer, Monika, 15754 Senzig (DE); Wurzel, Rajko, 14199 Berlin (DE); Uhlig, Christoph, 12487, Berlin (DE); Bauer, Jörg, 13156, Berlin (DE)
(74) Vertreter: Olgemöller, Luitgard Maria

(56) Entgegenhaltungen:
- EP-A- 1 544 227
- EP-A2- 0 581 314
- WO-A-2004/085550
- WO-A1-01/02879
- WO-A1-01/02880
- WO-A2-96/11415
- US-A- 4 940 848
- US-A- 5 442 039
- US-A- 5 955 543
- BAUER M ET AL: "NETWORKS FROM DICYANATE OF BISPHENOL A AND DIPHENOLS" MAKROMOL. CHEM., MACROMOL. SYMP., Bd. 45, 1991, Seiten 97-103, XP009087791

## Beschreibung

Die Erfindung betrifft Harze (Prepolymere) aus Di- oder Polycyanaten und multifunktionellen Alkoholen, die ggf. zusätzlich geeignete rheologische Modifikatoren und/oder sonstige Füllstoffe enthalten können, gemäß Anspruch 1.

Für die Herstellung von Formteilen, z.B. aus Gießharzen, beschichteten Flächengebilden, Klebern, Haftvermittlern und anderes benötigt man häufig leichte Kunststoffmaterialien, die nach dem Aushärten gute Oberflächeneigenschaften aufweisen, die brandhemmend sind bzw. wirken und die gleichzeitig mechanisch sehr stabil sein können. Zu den Anforderungen an das Brandverhalten gehören dabei häufig eine geringe Brennbarkeit, eine geringe Wärmefreisetzungsrate, eine niedrige Rauchgasdichte sowie geringe Toxizität der gebildeten Brandgase.

Für diese Zwecke lassen sich flüssige oder viskose Harze einsetzen, die sich mit Hilfe von Wärme und/oder Druck nachvernetzen lassen. Wegen der oben genannten hohen Brandanforderungen kommen als Harze für solche Zwecke vorrangig Phenolharze in Frage. Phenolharze können jedoch die geforderten mechanischen Eigenschaften nicht bereitstellen; für Anwendungen, bei denen z.B. Schlagbelastungen auftreten, ist häufig ihre hohe Sprödigkeit problematisch. Außerdem werden Phenolharze über eine Polykondensationsreaktion dargestellt, bei der leichte und damit leicht flüchtige Komponenten freigesetzt werden. Bei der Härtung solcher Harzes gehen diese in den Gaszustand über. Dies kann verursachen, dass die Oberflächenqualität von aus solchen Materialien hergestellten Formteilen unbefriedigend ist, z.B. durch Blasenbildung.

Zudem bestehen bei der Herstellung von Harzen für verschiedene Anwendungen spezielle Anforderungen. Ein Beispiel ist das Klebrigkeitsverhalten (der sog. Tack, bzw. die Reaktivierbarkeit des Tack), das ggf. durch Modifikationen (Formulierung) des Harzes gewährleistet werden muss. Ein solches Klebrigkeitsverhalten wird z.B. für Klebstoffe, Gießharze, Binder für Laminate oder Haftvermittler benötigt. Blasenbildung kann bei entsprechenden Anwendungen zu Fehlstellen in den Klebflächen führen.

Um Harze zu formulieren, aus denen sich Formteile mit sehr guten Oberflächen erzeugen lassen, scheint die Verwendung von Additionsharzen aussichtsreicher als die von Kondensationsharzen, da hier während der Härtung keine Gase freigesetzt werden. Additionsharze mit guten mechanischen Eigenschaften sind Epoxidharze und Cyanatharze. Die heute kommerziell verfügbaren Epoxidharze sind jedoch für manche Zwecke nicht ausreichend flammwidrig, weil sie eine erhöhte (unzulässige) Brandlast, speziell Rauchgasdichte aufweisen. Aus der Elektronik sind zwar halogenierte Epoxidharze mit hoher Flammwidrigkeit bekannt, der Einsatz von Halogenen führt jedoch im Brandfalle zur Entstehung von hochtoxischen und hochkorrosiven Gasen, was eine Verwendung ausschließt.

Cyanatharze weisen dagegen bereits durch ihre Netzwerkstruktur (infolge des hohen Stickstoff-Anteils) eine intrinsische Flammwidrigkeit auf. Sie kombinieren eine niedrige Wärmefreisetzungsrate mit einer geringen Rauchgasdichte und einem niedrigen Anteil toxischer Gase im Brandfall.

Der Einfluss multifunktioneller Phenole auf die Vernetzung von Cyanatharzen wurde bereits früher an einem Modellsystem aus Bisphenol A-Dicyanat und Bisphenol A bzw. bromiertem Bisphenol A unter theoretischen, insbesondere kinetischen Gesichtspunkten untersucht, siehe z.B. M. Bauer et al., Makromol. Chem., Macromol. Symp. 45, 97-103 (1991); M. Bauer, Pure and Modified Polycynurates - Polymers with Great Future as Adhesives, Casting Resins, and Binders for Laminates, Acta Polymer. 43, 299-302 (1992). Harze aus Bisphenol A-Dicyanat und Bisphenol A bzw. dessen bromierten Derivaten sind daher nicht Gegenstand dieser Erfindung. Das Produktspektrum der Umsetzung des Dicyanat-Derivats von Bisphenol A (DCBA) mit 4,4'-Thiodiphenol wurde in der Dissertation von Daniela S. Glaser, Analyse der Molekülstrukturen und des Netzwerkaufbaus von mono- und difunktionellen Cyanaten bei Coreaktionen mit Thiolen und Alkoholen, Technische Hochschule Cottbus, 23. April 2003), massenspektroskopisch analysiert.

In der Literatur gibt es einige Vorschläge zur Verwendung von Cyanatharzen. So ist im japanischen Abstract mit der Veröffentlichungs-Nr. 2002-194212 A eine härtbare Harzzusammensetzung für Laminate bzw. Prepregs hierfür offenbart, die einen Cyanatester, eine monofunktionelle Phenolkomponente, ein Polyphenylenetherharz, einen Flammverzögerer, der nicht mit dem Cyanatester reagieren kann, sowie einen metallhaltigen Reaktionskatalysator aufweist. Mit dem hitzebeständigen, formbaren Harz werden ein Prepreg und ein Laminat hergestellt. Das japanische Abstract mit der Veröffentlichungs-Nr. 2002-146185 schlägt ein ähnliches Harz vor; hierfür wird jedoch anstelle des Polyphenylenetherharzes ein Polyethylenharz eingesetzt. Gemäß dem japanischen Abstract mit der Veröffentlichungs-Nr. 02-302446 wird ein Prepreg und eine daraus gefertigte Leiterplatte bereitgestellt, wobei die Komponenten für das Tränkharz ein polyaromatisches Cyanat, ein mehrwertiges Phenol, ein polyaromatisches Cyanat-Phenol, ein Katalysator und, bei Bedarf, ein Flammverzögerer sind. Ebenfalls für eine gedruckte Schaltung vorgesehen ist die Harzzusammensetzung, die in der EP 0889096 A2 offenbart ist und aus einem modifizierten Cyanatester, einer monofunktionellen Phenolkomponente, einem Polyphenylenetherharz sowie einem Flammschutzmittel erzeugt wird. In der EP 0295375 A2 findet sich der Vorschlag, Prepregs mit einer abziehbaren, mit Silicon beschichteten Folie zu versehen, um einen langanhaltenden Tack zu gewährleisten. Das Harz der Prepregs besteht aus einer cyanat-funktionalisierten Basis, die zusätzliche Bestandteile wie Epoxy- oder Maleimidharze enthält.

Im japanischen Abstract 03243634 A ist ein Harz offenbart, das aus 2-30 Gew.-% des Reaktionsprodukts von Neopentylglycol und Terephthalsäurechlorid, also einem Oligoester, mit einem durchschnittlichen Molekulargewicht von 200-2000 und Hydroxygruppen an beiden Enden, sowie 98-70 Gew.-% eines Harzes aus einer Cyanatester-Komponente und einer Bismaleimid-Komponente besteht. Mit diesem Harz werden entsprechende organische oder anorganische Fasern imprägniert.

WO 96/11415 A2 offenbart optische Elemente aus Polycyanuratharzen. Für ihre Herstellung können u.a. Dicyanate und substituiertes Bisphenol A zusammen mit einem Katalysator vermischt werden, worauf die entstandene Mischung bis zur völligen Aushärtung erwärmt wird.

WO 01/02879 A1 offenbart ein optisches System aus einem Poly(perfluorcyclobutan) und einem Polycyanatharz, das aus mehrfunktionellen Cyanaten aufgebaut und mit Monocyanaten oder mit Monoalkoholen, Bisphenolen, Novolaken oder nichtaromatischen Dihydroxyverbindungen copolymerisiert ist. Eine weitgehend vergleichbare Lehre kann WO 01/02880 A1 entnommen werden.

Aufgabe der vorliegenden Erfindung ist es, Harze (Prepolymere) bereitzustellen, die gleichzeitig die folgenden Eigenschaften aufweisen sollen:
- eine Verarbeitbarkeit/Härtbarkeit (mit oder ohne Druck) im Bereich zwischen ca. 100°C und 200°C über einen Zeitraum von wenigen Minuten,
- eine gute Lagerstabilität, und
- eine geringe Sprödigkeit sowie eine hohe Brandfestigkeit der aus den Harzen hergestellten Materialien mit geringer Wärmefreisetzungsrate, niedriger Rauchgasdichte sowie geringer Toxizität der gebildeten Brandgase.

In spezifischen Ausgestaltungen der Erfindung sollen die Harze weiterhin eine bleibende oder mit Hilfe eines Lösungsmittels wiederherstellbare Klebrigkeit besitzen, um deren Verwendung als Kleber, Haftvermittler oder dergleichen zu gewährleisten, und/oder sie sollen sich zu Produkten mit besonders glatten Oberflächen verarbeiten lassen.

Die Lösung der gestellten Aufgabe stößt auf Schwierigkeiten. Denn besonders flammwidrige Cyanatharze auf Basis von Phenol-Novolaken, z.B. PT-Harze der Fa. Lonza, haben nach vollständiger Aushärtung sehr hohe Glastemperaturen. Um einen vollständigen Umsatz an Cyanatgruppen zu erreichen, ist es daher erforderlich, hohe Härtungstemperaturen anzuwenden. Es ist zwar auch möglich, bei tieferen Temperaturen zu härten, denn die Reaktion kann z.B. durch Verwendung herkömmlicher Katalysatoren wie z.B. Metall-Acetylacetonat-Komplexe beschleunigt werden. Allerdings wird durch den Einsatz derartiger Katalysatoren die maximale Glastemperatur nicht herabgesetzt, und es wird nur die erste Phase der Härtungsreaktion beschleunigt; bei Härtungstemperaturen weit unterhalb der Härtungstemperatur, die für den maximalen Umsatz an OCN-Gruppen erforderlich ist, friert die Reaktion bei einem bestimmten OCN-Umsatz (der von der Härtungstemperatur bzw. deren Abstand von der maximalen Glasübergangstemperatur (d.h der Glasübergangstemperatur bei maximalem OCN-Umsatz) abhängig ist) ein. Unterhalb eines bestimmten Umsatzes verspröden Cyanatnetzwerke außerordentlich.

Deshalb könnte nach anderen Katalysatoren gesucht werden, die zugleich Netzwerkmodifikatoren darstellen, die das Netzwerk aufweiten und zugleich die Vernetzungsreaktion der Cyanatharze (Trimerisierung) katalysieren. Durch eine Netzwerkaufweitung würde die Glastemperatur herabgesetzt, so dass Härtungstemperaturen gewählt werden können, die niedriger als die für reine Cyanatester-Harze benötigten liegen, und damit vermieden werden kann, dass die oben beschriebene Versprödung durch zu geringen Umsatz an OCN-Gruppen auftritt.

Diese Suche ist jedoch problematisch. Der in der Literatur beschriebene Zusatz von monofunktionellen Phenolen erscheint beispielsweise nicht vielversprechend. Monofunktionelle Phenole wie im Stand der Technik eingesetzt werden bei der Reaktion in das Polymer eingebaut. Der zugrundeliegende Mechanismus ist sehr komplex. Die Erfinder der vorliegenden Anmeldung haben nämlich festgestellt, dass die Zahl der OH-Gruppen trotz des Einbaus der Phenole konstant bleibt. Der Grund ist der folgende: Für jede einreagierte OH-Gruppe wird an einer anderen Stelle eine OH-Gruppe freigesetzt. Der Effekt des multifunktionellen Phenols ist daher der, dass aus einer trifunktionellen Vernetzungsstelle eine difunktionelle Verknüpfung wird, weil die OH-Gruppe ein Netzkettenende bildet. Dadurch wird durch Monophenole die Netzwerkdichte übermäßig stark reduziert. Sie eignen sich daher nicht für die Zwecke der vorliegenden Erfindung, weil sie die Glastemperaturen deutlich über jedes wünschenswerte Maß hinaus herabsetzen und man im Harz außerdem einen unerwünscht hohen Solgehalt findet. Ein weiterer Nachteil liegt darin, dass Komponenten mit relativ hoher Flüchtigkeit im Harz verbleiben, die zu späterem Ausgasen führen, was wiederum zu verhindern ist, weil, wie bereits oben beschrieben, in der Folge davon beispielsweise ungenügende Oberflächenqualitäten (Blasenbildung von daraus hergestellten Produkten) resultieren können. Außerdem sind die Ausgangskomponenten flüchtig, was Verarbeitungs- (und ggf. auch Gefahrstoff)-Probleme mit sich bringt.

Aufgrund der Anwesenheit von Hydroxygruppen wäre außerdem damit zu rechnen, dass die Reaktion zumindest innerhalb längerer Zeitspannen, wie sie bei einer längeren Lagerung auftreten, nicht wie erforderlich vor Erreichen des Gelpunkts zum Stillstand kommt, sondern bis zu einem Vernetzungsgrad abläuft, der weit über dem Gelpunkt und damit der Verarbeitbarkeit (der homogenen Aufschmelzbarkeit) der Harze liegt.

Ein gute Lagerstabilität ist jedoch unbedingt erforderlich, weil Harze wie die von der vorliegenden Erfindung vorgesehenen und umfassten nach ihrer Herstellung, und zwar entweder als ungeformte Masse oder bereits in die äußerliche Endform überführt, häufig über einen längeren Zeitraum gelagert werden müssen, bevor sie mit Hilfe von Wärme und/oder Druck in die endgültige Aushärtungsstufe überführt werden.

Um eine gute Verarbeitung der Harze sicherzustellen, können sie ggf. zusätzlich rheologische Modifikatoren enthalten. Solche Modifikatoren oder andere Füllstoffe können auch zum Verbessern der Haftung, der Härte, der Zähigkeit, der Schlagfestigkeit, der Hydrophilie/Hydrophobie oder dgl. erwünscht sein. Diese Modifikatoren der Cyanatharze dürfen dabei nicht zugleich die sehr guten Brandeigenschaften (niedrige Wärmefreisetzungsrate, niedrige Rauchgasdichte, einen niedrigen Gehalt an toxischen Gasen im Brandfall) negativ beeinflussen. Epoxide als Co-Monomere sind zum Beispiel nicht geeignet, da durch die Modifikation von Cyanatharzen wie PT-Harzen mit Epoxiden sowohl die Wärmefreisetzungsrate als auch die Rauchgasdichte erheblich gesteigert wird.

Insbesondere die Fließeigenschaften der Harze können ggf. hierdurch so eingestellt werden, dass die Heißhärtung (z.B. in einer Presse) zu exzellenten Oberflächen der Produkte führt.

Überraschenderweise kann erfindungsgemäß ein Harz oder Prepolymer bereitgestellt werden, das alle obigen Bedingungen erfüllt. Dieses Harz oder Prepolymer ist hergestellt unter Verwendung mindestens eines multifunktionellen Cyanats und mindestens eines di- oder polyfunktionellen aromatischen Alkohols wie in Anspruch 1 definiert in Mengenanteilen, die ein molares Verhältnis der OCN-Gruppen zu OH-Gruppen in den Ausgangsmaterialien zur Herstellung des Prepolymeren oder Harzes zwischen 95:5 und 70:30 gewährleisten, sowie ggf. mindestens eines Füllstoffs, wobei das Harz in einem Vernetzungsgrad vorliegt, der unter seinem Gelpunkt liegt, wobei ein Harz, hergestellt aus dem Dicyanat-Derivat von Bisphenol A, in welchem die Hydroxygruppen durch Cyanatgruppen ersetzt sind, und aus entweder Bisphenol A oder einem bromierten Derivat von Bisphenol A oder 4,4'-Thiodiphenol (TDP) vom Schutzumfang ausgeschlossen ist, soweit das Harz keine weiteren Komponenten enthält. Ausgeschlossen sollen auch solche Harze sein, deren Hydroxy- und Cyanat-Ausgangsmaterialien ausschließlich difunktionell und aliphatischer Natur sind.

Unter "Prepolymer", "Harz" und "prepolymerisiertem Harz" soll erfindungsgemäß gleichermaßen ein Additionspolymer aus den oder unter Verwendung der jeweils genannten Ausgangssubstanzen verstanden werden.

Es konnte festgestellt werden, dass durch die erfindungsgemäße Wahl des molaren Verhältnisses von OCN- zu OH-Gruppen in den Ausgangskomponenten bei einem Präpolymerisationsschritt/Vorvernetzungsschritt unter milden Bedingungen (in der Regel Erwärmung auf zwischen 60°C und 140°C) zu einem Harz führt, dessen Vernetzungsgrad unterhalb seines Gelpunktes liegt. Bei den genannten milden Bedingungen ist es nicht erforderlich, die Reaktion abzubrechen; die Reaktion stoppt überraschenderweise von selbst. Außerdem hat sich herausgestellt, dass sich das vorvernetzte Harz überraschenderweise über längere Zeiträume lagern lässt, ohne dass sich der Vernetzungsgrad erhöht. Das Harz kann daher für relativ lange Zeiträume (in der Regel mehrere Wochen, z.B. bei Raum- oder abgesenkter Temperatur) gelagert werden, bevor es in die endgültige Form gebracht und gehärtet werden muss. Darüber hinaus kann die Härtung bei relativ milden Bedingungen, insbesondere milden Temperaturen erfolgen, die nur einige zehn K bis ca. 100 K oberhalb der für die Vorvernetzung erforderlichen Temperaturen liegen.

Die Cyanatharze sollen vorzugsweise frei von Epoxiharz-Bestandteilen sein.

Die vorliegende Erfindung stellt damit mit multifunktionellen, vorwiegend aromatischen Alkoholen modifizierte Cyanatharze bereit, die sich als Gießharze, Kleber, Haftvermittler oder dgl. eignen und bei sehr moderaten Temperaturen (zwischen etwa 100°C und 200°C) ggf. unter Druck im Minutenbereich (ca. 1-20 min) aushärten können.

Ggf. vorhandene Modifizierungen des Cyanatharzes (d.h. die Formulierungen) beeinflussen die hohe Flammwidrigkeit der Harze nicht oder nur geringfügig, d.h. die niedrige Wärmefreisetzungsrate und niedrige Rauchgasdichte wird bewahrt. Der Anteil toxischer Gase wird dabei auch nicht erhöht.

Als überraschend kann hervorgehoben werden, dass Latenz erreicht wird, obwohl mit den aromatischen Alkoholen, wie oben definiert, Verbindungen eingesetzt werden, deren katalytische Wirkung eine Weiterreaktion der Harze erwarten ließe. Diese Latenz ermöglicht die Fertigung, den Transport und die Lagerung der Harze in den dafür heute üblichen Zeiträumen.

In günstigen Ausgestaltungen wird dem Harz mindestens ein Füllstoff zugesetzt, mit dessen Hilfe hervorragende Oberflächen erhalten werden und/oder eine gute Anbindung an ein Substrat und/oder ein noch weiter verbesserter Brandschutz und/oder eine Verbesserung der mechanischen Eigenschaften erreicht werden kann. Dieser Füllstoff sollte je nach Zweckbestimmung vorzugsweise in Mengen von bis zu ca. 30 Masse-%, bezogen auf das gefüllte Harz, vorhanden sein. Stärker bevorzugt ist der Füllstoff in Mengen von ca. 1-25 Masse-%, noch stärker bevorzugt in Mengen von ca. 5-20 Masse-% vorhanden.

Darüber hinaus kann je nach Bedarf ein hoher Tack eingestellt werden oder dieser Tack durch Besprühen mit einem geeigneten Lösungsmittel, z.B. Isopropanol, auch nach langen Lagerzeiten reaktiviert werden, wie es häufig für Anwendungen gewünscht wird, die eine gute Anbindung des Harzes oder dessen Klebrigkeitseigenschaften als Kleber oder Haftvermittler voraussetzen.

Durch die Modifikation der Cyanate mit multivalenten Phenolen, wie oben definiert, wird die Härtung bei moderaten Temperaturen (z.B. 130 oder 160°C bis ca. 200°C) möglich, ohne dass dabei die intrinsische Flammwidrigkeit der reinen Cyanate negativ beeinflusst wird (dies ist bei der bekannten Modifikation der Cyanate mit Epoxiden nicht der Fall, hier wird die Flammwidrigkeit deutlich herabgesetzt).

Gegebenenfalls kann die Reaktivität auch durch Beigabe bekannter Katalysatoren, z.B. eines Metallacetylacetonats, verändert (weiter erhöht) werden, wie es aus dem Stand der Technik bekannt ist.

Überraschend ist vor allem das Erreichen einer Kombination der oben geforderten Eigenschaften, die von Haus aus größtenteils gegenläufig sind, mit einer einzigen Formulierung.

Die Wahl der als Ausgangsmaterial für das Harz einzusetzenden multifunktionellen Cyanate ist nicht kritisch. Prinzipiell kann jeder mindestens bifunktionelle Cyanatkörper eingesetzt werden, darunter vor allem aromatische Cyanate und unter diesen wiederum insbesondere di- oder polyfunktionelle Cyanate der nachfolgend aufgeführten Strukturen I-III: 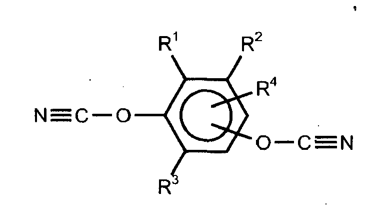 worin R¹ bis R⁴ unabhängig voneinander Wasserstoff, C₁-C₁₀-Alkyl, C₃-C₈-Cycloalkyl, C₁-C₁₀-Alkoxy, Halogen (F, Cl, Br oder I), Phenyl oder Phenoxy ist, wobei die Alkyl- oder Arylgruppen fluoriert oder teilfluoriert sein können. Beispiele sind Phenylen-1,3-dicyanat, Phenylen-1,4-dicyanat, 2,4,5-Trifluorophenylen-1,3-dicyanat; 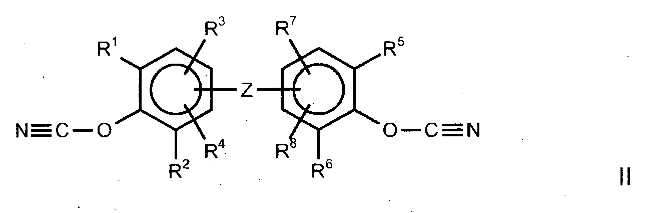 worin R⁵ bis R⁸ wie R¹ bis R⁴ sind und Z eine chemische Bindung, SO₂, CF₂, CH₂, CHF, CH(CH₃), Isopropylen, Hexafluoroisopropylen, C₁₋C₁₀-Alkylen, O, NR⁹, N=N, CH=CH, COO, CH=N, CH=N-N=CH, Alkylenoxyalkylen mit C₁-C₈-Alkylen, S, Si(CH₃)₂ oder 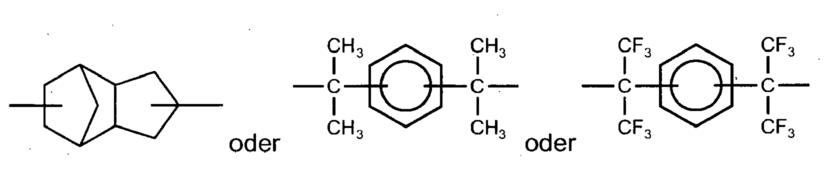 ist.

Beispiele sind 2,2-Bis(4-cyanato-phenyl)propan, 2,2-Bis(4-cyanatophenyl)hexafluoropropan, Biphenylen-4,4`-dicyanat; 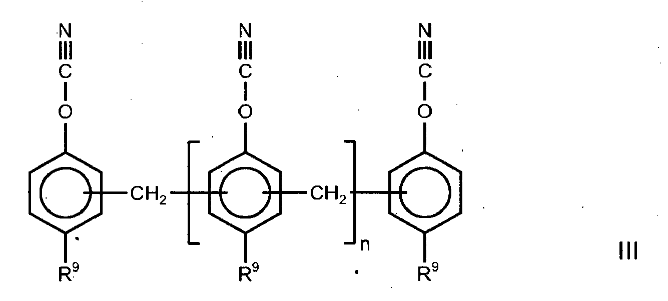 worin R⁹ Wasserstoff oder C₁-C₁₀-Alkyl ist und n eine ganze Zahl von 0 bis 20 bedeutet, sowie
di- oder mehrfunktionelle aliphatische Cyanate mit mindestens einem Fluoratom im aliphatischen Rest und vorzugsweise der Struktur IV:

N≡C-O-R¹⁰-O-C≡N IV

worin R¹⁰ ein zweibindiger organischer nichtaromatischer Kohlenwasserstoff mit mindestens einem Fluor-Atom und insbesondere mit 3 bis 12 Kohlenstoffatomen ist, dessen Wasserstoffatome vollständig oder teilweise durch weitere Fluor-Atome ersetzt sein können.

Die genannten Cyanate können als Monomere oder als Prepolymere, allein oder in Mischungen untereinander oder im Gemisch mit weiteren monofunktionellen oder polyfunktionellen Cyanaten eingesetzt werden.

Als Beispiele für gut geeignete Cyanate seien das Dicyanat von Bisphenol A (4,4'-Dimethylmethylen-diphenyldicyanat), 4,4'Ethylidendiphenyldicyanat oder Verbindungen mit der Formel III genannt, worin n 1, 2 oder 3 ist, R⁹ Wasserstoff ist und die Methylengruppe jeweils in ortho-Position zur Cyanatgruppe steht.

Die einzusetzenden di- oder polyfunktionellen aromatischen Alkohole sind Verbindungen der oben für Cyanate angegebenen Strukturen I bis III, in denen die Cyanatgruppen durch Hydroxygruppen ersetzt sind. Selbstverständlich können auch Mischungen von Alkoholen wie oben definiert eingesetzt werden.

Vorzugsweise handelt es sich bei den multivalenten aromatischen Alkoholen um multivalente Phenole. Stattdessen können aber auch z.B. kondensierte Aromaten eingesetzt werden wie z.B. Naphtholderivate. Besonders bevorzugt handelt es sich bei den multivalenten Phenolen oder sonstigen Aromaten um divalente (difunktionelle) Alkohole. Die Hydroxygruppe ist jeweils direkt an den aromatischen Ring gebunden.

Als Beispiele für gut geeignete Bisphenole seien Bisphenol A, 4,4'-Ethylidendiphenol oder Bishydroxyphenylsulfid (auch als Thiodiphenol, TDP bezeichnet) genannt.

Das Material des oder der vorzugsweise zuzusetzenden Füllstoffe wird nach den Kriterien der gewünschten Produkteigenschaften in geeigneter Weise ausgewählt.

Beispielsweise können Füllstoffe wie z.B. Mikrofiller verwendet werden, wie sie als Verstärkungsmaterialien in Duromeren eingesetzt werden, also Füllstoffe mit einer Korngrößenverteilung, deren Schwerpunkt im µm-Bereich liegt (sogenannte Mikrofiller). Aber auch Nanofiller mit kleineren Korngrößen (Korngrößenverteilung mit Schwerpunkt unterhalb des µm-Bereichs) sind möglich, beispielsweise Aerosile, wie sie von der Fa. Degussa vertrieben werden, mit mittleren Teilchengrößen kleiner 100 nm. Unabhängig davon, ob Mikrofiller und/oder Nanofiller eingesetzt werden, werden diese vorzugsweise ausgewählt unter anorganischen Füllstoffen, die gegebenenfalls organisch modifiziert und/oder beschichtet sein können. Geeignete Materialien sind beispielsweise Siliciumdioxid, keramische Materialien, organisch modifizierte Silikone oder Siloxane oder Mischungen hiervon, insbesondere solche mit sehr hohen Oberflächen und/oder kleinen Korngrößen. Insbesondere Materialien wie Nanofiller (z.B Aerosile der Fa. Degussa) können zu einer besonders glatten Oberfläche des aus den Harzen hergestellten Produkts beitragen.

Unabhängig davon, ob Mikrofiller und/oder Nanofiller eingesetzt werden, werden diese vorzugsweise ausgewählt unter anorganischen Füllstoffen, die gegebenenfalls organisch modifiziert und/oder beschichtet sein können. Geeignete Materialien sind beispielsweise Siliciumdioxid, keramische Materialien, organisch modifizierte Silikone oder Siloxane oder Mischungen hiervon, insbesondere solche mit sehr hohen Oberflächen und/oder kleinen Korngrößen, wie z.B. Aerosil® von Degussa, gegebenenfalls organophil modifizierter Bentonit wie Nanofil 2 der Südchemie oder mit einer organischen Beschichtung (z.B. einem Acrylat) beschichtete anorganische Teilchen oder solche aus einer organisch-anorganischen Matrix, z.B. aus einem Heteroorganopolysiloxan (sog. Core-Shell-Partikel). Letztere können beispielsweise so aufgebaut sein, dass sie einen weichen (elastomeren) Kern und eine harte (Polymer)-Schale aufweisen. Die genannten Materialien sind besonders geeignet, um sehr glatte Oberflächen der aus den Harzen herzustellenden Oberflächen zu erzielen. Außerdem kann man mit solchen Partikeln z.B. eine Bruchzähmodifizierung erreichen. Dies gelingt insbesondere mit den genannten Core-Shell Partikeln.

Die Füllstoffe können allein oder in Mischung eingesetzt werden. Als sehr gut geeignet haben sich Mischungen verschiedener Füllstoffe aus unterschiedlichen Materialien erwiesen. Ihr Anteil im Harz kann vorzugsweise bis zu 20 Masse-% betragen.

Fakultativ können dem Ausgangsmaterial für die Harze weitere Zusätze beigegeben werden, oder solche Zusätze werden in das präpolymerisierte Harz nachträglich eingearbeitet. Beispiele für solche Additive sind oberflächenmodifizierende, z.B. die Oberflächenspannung senkende Mittel wie das fluorkohlenstoffmodifizierte Polymer EFKA-8300 von EFKA Additives BV, Niederlande.

Besonders überraschend konnte erfindungsgemäß festgestellt werden, dass der Zusatz von Füllstoffen zu den vorgeschlagenen Cyanatharzmassen eine höhere Zähigkeit der gehärteten Massen hervorruft, die beispielsweise die Anbindung der Massen an Substrate verbessert.

Einige der vorgenannten Füllstoffe erhöhen außerdem die Brandsicherheit. Weitere Füllstoffe, die insbesondere zur Verbesserung der Brandschutzeigenschaften zugesetzt werden können, sind halogen-, stickstoff-, oder borhaltige Materialien, phosphororganische Substanzen sowie Materialien, die bei Hitze ihr Volumen vergrößern.

Beispiele für anorganische Flammschutzmittel sind Oxide, Hydroxide, Oxidhydrate, Mischoxide, Sulfide, Sulfate, Carbonate, Phosphate und/oder Fluoride von Mg, Ca, B, Sr, Ba, Ti, V, Cr, Mn, Fe, Co, Ni, Cu, Zn, Zr, Nb, Mo, Cd, W, Ga, In, Si, Ge, Sn, Pb, Sb oder Bi; des weiteren Ammoniumpolyphosphate, Borsäure, roter Phosphor, natürliche oder synthetische Silciumoxide wie Kieselgur, Kieselerde, Quarz, Silikate, Talkum, Kaolin, Glimmer, Bimsmehl, Perlite, Feldspat, Mullit, Wollastonit und Vermiculit, der sich unter Hitze aufbläht, Basalt, Schiefermehl, Glasmehl, Lava, pyrogene oder gefällte Kieselsäure, Kieselgele, Schichtsilikate wie Montmorillonit, Bentonite, Sulfate oder Carbonate von Elementen der zweiten Hauptgruppe, Kreide, Calcit oder Dolomit, Siliciumcarbid, Steinwolle, Graphit, Glaskugeln, Glashohlkugeln, Glasfasern, anorganische Faserfüllstoffe, anorganische Pigmente oder Farbmittel.

Beispiele für halogenhaltige Flammschutzmittel sind Decabromdiphenyloxid, Ethan-1,2-bis(pentabromphenol), Ethylen-bis-tetrabromphthalimid, bromiertes Polystyrol, Tri- bis Decabromdiphenylether, Tetrabrombisphenol A und seine Derivate, polybromierte Bisphenyle, Hexabromcyclododecan, Tetrabromphthalsäureanhydrid, dessen Diester/Diether, Ethylen-bis(tetrabromphthalimid), Salze von Tetrabromphthalaten, Dibrommethyldibromcyclohexan, Dibromneopentylglycol, Tribromneopentylalkohol, Vinylbromid, 2,4,6-Tribromphenol, Bis(tribromphenylenoxid), Pentabrommethylbenzol, Poly(pentabrombenzylacrylat), Polydibromstyrol und andere.

Weitere intumeszierende Flammschutzmittel können beispielsweise unter Melaminphosphaten und -cyanuraten ausgewählt werden, ohne darauf beschränkt zu sein. Weiter intumeszierende Flammschutzmittel sind auch im Handel erhältlich.

Geeignete stickstoffhaltige Flammschutzmittel umfassen Melamin, das intumeszierende Eigenschaften besitzt, oder Melaminsalze der Borsäure, Phosphorsäure oder anderer anorganischer Säuren.

Geeignete borhaltige Flammschutzmittel sind beispielsweise Borsäure, Borax, Borate, Zinkborat, Metaborate des Bariums oder des Calciums und die Tetrafluoroborate von Natrium oder Kalium.

Geeignete phosphorhaltige Flammschutzmittel können anorganischer oder organischer Natur sein. Beispiele sind Phosphorsäureester, Ammoniumpolyphosphat, Triphenylphosphat, Tricresylphosphat, (2-((Hydroxymethyl)carbamyl)ethyl)phosphonsäuredimethyleter oder organische Phosphinate.

In besonders bevorzugten Ausgestaltungen können die organischen Phosphorverbindungen Gruppen enthalten, mit denen sie in die Harze der vorliegenden Erfindung einpolymerisiert sind oder einpolymerisiert werden können. Beispiele hierfür sind Phosphorderivate, die Hydroxy- oder Cyanatgruppen enthalten, z.B. Phosphinat-Verbindungen der Formel (VI)

[(R¹O)(R²)P(O)-(CHR³)ₘ-CR⁵(OH)]ₙR⁴ (VI)

worin R¹ und R² unabhängig voneinander eine gegebenenfalls substituierte Alkyl-, Aryl-, Arylalkyl-, Alkylaryl oder Alkylarylalkylgruppe mit vorzugsweise 1 bis 20 Kohlenstoffatomen darstellen, R³ und R⁵ jeweils unabhängig voneinander Wasserstoff oder eine gegebenenfalls substituierte Alkyl-, Aryl-, Arylalkyl-, Alkylaryl oder Alkylarylalkylgruppe mit vorzugsweise 1 bis 20 Kohlenstoffatomen sind, R⁴ Wasserstoff oder ein organischer Rest mit mindestens einem und vorzugsweise bis zu etwa 40 bis 50 Kohlenstoffatomen darstellt, der n-fach mit dem phosphorhaltigen Rest substituiert ist und ggf. weitere Substituenten trägt, wobei im Rest R⁴ dann, wenn er mehr als ein Kohlenstoffatom enthält, benachbarte Kohlenstoffatome einer Kohlenstoffkette durch Sauerstoffatome, Schwefelatome oder Aminogruppen unterbrochen sein können, m gleich 0 oder 1 ist und n eine ganze Zahl von 1 bis 6 darstellt, wobei dann, wenn n mehr als 1 ist, R⁴ nicht Wasserstoff sein darf.

Die Reste R¹ und R² können gegebenenfalls Heteroatome wie Silicium, Stickstoff, Phosphor, Sauerstoff, Schwefel, Halogene oder metallorganische Fragmente enthalten. Vorzugsweise enthält mindestens einer dieser beiden Reste einen Arylrest oder ist eine Phenylgruppe. Zu nennen sind Verbindungen der Formel (I), in denen die Kohlenstoffatome der Reste R¹ und R² miteinander verbunden sind, beispielsweise unter Bildung eines Oxaphosphaphenanthren-, -hexan- oder -benzolsystems. Ganz bevorzugt handelt es sich bei dem Rest (R¹O)(R²)P(O) um ein Derivat von 1:9,10-Dihydro-9-oxa-10-phosphaphenanthren-10-oxid (DOPO) mit der nachstehenden Formel 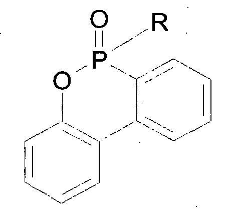 worin R gleich H ist. Für die genannten ganz besonders bevorzugten Verbindungen ist R in dieser Formel gleich -(CHR³)m-CH(OH)]nR⁴ . DOPO ist eine nicht toxische, Langzeit-lagerstabile Substanz.

In der EP 1544227 A1 ist beschrieben, dass Verbindungen der Formel (VI) und insbesondere solche mit dem DOPO-Rest eingesetzt werden können, um einem organischen Material direkt oder indirekt Flammschutz zu verleihen, und zwar unter anderem dadurch, dass sie direkt in entsprechende Polymere eingebaut werden. Hydroxyphosphinate der Formel (Vl), in denen der Index m null oder 1 ist, zeichnen sich dadurch aus, dass sie nur ein oder zwei Kohlenstoffatome zwischen dieser Kopplungsgruppe und dem Phosphoratom enthalten und damit einen hohen Phosphor-Gewichtsanteil besitzen können, was die Flammschutzwirkung verbessert. Solche Phosphinate der Formel (I) sind daher für die Zwecke der vorliegenden Erfindung besonders bevorzugt, und hierunter wiederum am meisten solche, in denen m gleich 0 ist. Ein Beispiel hierfür ist das Umsetzungsprodukt von DOPO mit (Para-)Formaldehyd, worin R in der obigen Formel die Methylolgruppe CH₂OH ist. Diese Verbindung wird auch als DOPOform bezeichnet.

Durch das Vorhandensein von Hydroxygruppen können Verbindungen mit der Formel (Vl) direkt in die Harze der vorliegenden Erfindung einpolymerisiert werden. Gleiches wäre natürlich mit analogen Cyanatverbindungen möglich, soweit sie zur Verfügung stehen, wobei die Möglichkeit des Einbaus solcher oder ähnlicher Substanzen natürlich nicht auf Verbindungen beschränkt wäre, in denen m gleich 0 oder 1 ist. Ganz besonders bevorzugt ist es, in die erfindungsgemäßen Harze Verbindungen der Formel (Vl) mit n gleich 2 oder größer einzusetzen, weil diese Verbindungen hinsichtlich des Netzwerkaufbaus des Harzes die gleichen Eigenschaften besitzen wie der/die di- oder polyfunktionellen aromatischen oder aliphatischen, im aliphatischen Rest mit mindestens einem Fluoratom substituierten Alkohole. Dabei ist darauf zu achten, dass das molare Verhältnis von OCN- zu OH-Gruppen in den Ausgangsmaterialien zur Herstellung des Harzes im erfindungsgemäßen Rahmen (95:5 bis 70:30) bleibt.

Die Füllstoffe können allein oder in Mischung eingesetzt werden. Als sehr gut geeignet haben sich Mischungen verschiedener Füllstoffe aus unterschiedlichen Materialien erwiesen. Ihr Anteil im Harz kann wie erwähnt vorzugsweise bis zu 20 Masse-% betragen.

Zur Herstellung des Prepolymerisats werden der oder die Cyanat-Bestandteile und der oder die multifunktionellen Alkohole in geeigneten Mengenverhältnissen hinsichtlich der oben erwähnten Molverhältnisse von OCN zu OH in der Regel getrennt oder gemeinsam in einem geeigneten Lösungsmittel gelöst. Die Alkohol-Komponente wird dementsprechend in der Regel in einem Verhältnis von 2 bis 20 Ma-% zugesetzt werden. Lösungsmittel für Cyanatester-Harze sind dem Fachmann bekannt; ein häufig eingesetztes ist Methylethylketon. Sofern die Lösungen getrennt bereitet werden, werden sie anschließend gut gemischt. Gegebenenfalls kann zur Beschleunigung der Vernetzung ein weiterer Katalysator zugesetzt werden, wie er aus dem Stand der Technik bekannt ist, beispielsweise ein Metall-Acetylacetonat-Komplex. Alternativ können die Reaktionspartner auch direkt miteinander vermischt werden, ohne dass ein Lösungsmittel zum Einsatz kommt.

Sofern das Prepolymer einen oder mehrere Füllstoffe enthalten soll, kann/können diese(r) einer der Lösungen oder der einzigen bzw. vereinten Lösung der Cyanat- und Alkoholkomponenten (bzw., sofern in Abwesenheit von Lösungsmittel gearbeitet wird, der lösungsmittelfreien Mischung oder einer der Ausgangskomponenten hierfür) zu einem beliebigen Zeitpunkt zugesetzt werden. Die Dispergierung erfolgt in der Regel mit den hierfür üblichen Hilfsmitteln. Die Lösung bzw. Dispersion, die gegebenenfalls auf eine geeignete Viskosität eingeengt oder verdünnt wird, kann sodann als Gießharz, Kleber oder Haftvermittler oder für einen anderen Zweck wie oben angegeben eingesetzt werden. Je nach vorgesehenem Einsatzzweck wird sie anschließend ggf. in die spätere Form gebracht, z.B. als Kleber oder Haftvermittler auf ein Substrat aufgestrichen, bevor sie ggf. unter Temperatureinwirkung getrocknet wird, wobei das Lösungsmittel verdampft und das Harz prepolymerisiert wird. Die Dauer der Trocknung und damit der Prepolymerisationsgrad werden nach der jeweiligen Anforderung gewählt; er sollte vorzugsweise jedoch vor Erreichen des sogenannten Gelpunktes liegen, so dass ein erneutes Aufschmelzen und somit eine spätere Formgebung möglich ist. Als Temperaturbereich für die Trocknung eignet sich insbesondere derjenige zwischen 80 bis 200°C, ohne natürlich darauf beschränkt zu sein. Alternativ kann das Harz in Bulkform mit oder ohne Vortrocknung gelagert werden. Unabhängig von der erhaltenen Form wird es während der Lagerung vorzugsweise gekühlt (in der Regel bei etwa 0 bis -26°C, bevorzugt bei -26°C) aufbewahrt. Zur Endverarbeitung (Verformung und/oder Verfestigung unter Wärmeeintrag und ggf. Druck) werden Temperaturen meist zwischen 100 und 200°C verwendet. Dabei kann ein Pressdruck angewandt werden. Härtungszeiten von ca. 2 bis 20 Minuten sind die Regel. Die Drücke sind der jeweiligen Verarbeitungstechnologie bzw. dem gewünschten Produkt anzupassen und liegen in der Regel bei etwa 1 bis 20 Bar (etwa 1 Bar typischerweise für einlagiges Laminat, etwa 20 Bar typischerweise für mehrlagige Laminate,) ohne darauf beschränkt zu sein.

Nachstehend soll die Erfindung anhand von Beispielen näher erläutert werden.

Die darin genannten Produkte bezeichnen Verbindungen bzw. Materialien wie folgt:
Primaset ® PT 15 (zu beziehen von Lonza) ist ein Oligo(3-methylen-1,5-phenylcyanat)
Primaset ® PT 30 (ebenfalls zu beziehen von Lonza) ist ein Oligo(3-methylen-1,5-phenylcyanat) mit einer höheren Funktionalität als PT 15
Primaset ® LeCy (zu beziehen von Lonza) ist 4,4'-Ethylidendiphenyldicyanat
Primaset ® BADCy (zu beziehen von Lonza) ist 4,4'-Isopropylidendiephenyldicyanat XU366 ist 1,3-Phenylen-bis(1-methylethyliden)diphenyldicyanat, zu beziehen über Ciba oder Huntsman

### Beispielgruppe 1 - allgemein

Umsetzungen von reinen Cyanat-Ester-Harzen (sowohl mehrfunktionell als auch difunktionell) mit Bisphenolen
Beispiel 1.1 Umsetzung von Primaset® PT15 oder von Primaset® PT30 mit Bishydroxyphenylsulfid
Beispiel 1.2 Umsetzung von Primaset® PT15 oder von Primaset® PT30 mit Bisphenol A
Beispiel 1.3 Umsetzung von Primaset® PT15 oder von Primaset® PT30 (Lonza) mit Bishydroxyphenylsulfon
Beispiel 1.4 Umsetzung von Primaset® LeCy mit Bishydroxyphenylsulfid
Beispiel 1.5 Umsetzung von Primaset® LeCy mit Bisphenol A
Beispiel 1.6 Umsetzung von Primaset® LeCy mit Bishydroxyphenylsulfon
Beispiel 1.7 Umsetzung von Primaset® BADCy mit Bishydroxyphenylsulfid
Beispiel 1.8 Umsetzung von Primaset® BADCy mit Bisphenol ABeispiel 1.9 Umsetzung von Primaset® BADCy mit Bishydroxyphenylsulfon

Die Cyanat-Ester-Komponente sowie die Bisphenol-Komponente werden in der Erfindung gemäß Anspruch 1 entsprechenden Mengenverhältnisse in Methylethylketon (MEK) gelöst. Typischerweise rechnet man dabei mit ca. 90-70%, vorzugsweise ca. 80 Ma-% Harz und 10-30 Ma-%, vorzugsweise ca. 20 Ma-% MEK. Anschließend werden die Lösungen zusammengegeben und unter Rühren vermischt. Alternativ können die Komponenten auch eingeschmolzen und durch Rühren miteinander vermischt werden. Gegebenenfalls kann ein Katalysator wie Cobalt(III)acetylacetonat oder Chrom(III)acetylacetonat in einer Menge von ca. 0,02 bis ca. 0.1 Gew.-%, vorzugsweise in einer Menge von 0,04 bis 0,05 Gew.-%, bezogen auf die Menge der Hydroxykomponente, zugesetzt werden.

Mit dieser Lösung kann ein Substrat beschichtet werden. Das beschichtete Substrat wird anschließend unter Temperatureinfluss, vorzugsweise bei ca. 80 bis 130°C, getrocknet, d.h. es wird das Lösungsmittel verdampft und das Harz prepolymerisiert. Die Dauer der Trocknung und damit der Prepolymerisationszustand liegen im Bereich von etwa 1 bis 10 Minuten, abhängig von der gewählten Temperatur (und konkreten Harzzusammensetzung), jedoch muss er vor Erreichen des sogenannten Gelpunktes liegen, sodass ein erneutes Aufschmelzen und somit eine Formgebung möglich ist. Die beschichteten Substrate werden zur Lagerung einer Kühlung zugeführt. Zur Endverarbeitung (Verformung unter Temperatur und ggf. Druck) kann eine Temperatur von 160°C bei einer Presszeit von 800s verwendet werden.

### Beispielgruppe 2 - allgemein

Umsetzung von Kombinationen von Cyanat-Ester-Harzen mit Bisphenolen

### Beispiel 2.1

Umsetzung von Mischungen von Primaset® PT15 und Primaset® PT30 mit Bishydroxyphenylsulfid
Beispiel 2.2 Umsetzung von Mischungen von Primaset® PT15 und Primaset® PT30 mit Bisphenol A
Beispiel 2.3 Umsetzung von Mischungen von Primaset® PT15 und Primaset® PT30 mit Bishydroxyphenylsulfon
Beispiel 2.4 Umsetzungen von Mischungen von Primaset® PT15 und Primaset® LeCy mit Bishydroxyphenylsulfid
Beispiel 2.5 Umsetzung von Mischungen von Primaset® PT15 und Primaset® LeCy mit Bisphenol A
Beispiel 2.6 Umsetzung von Mischungen von Primaset® PT15 (Lonza) und Primaset® LeCy (Lonza) mit Bishydroxyphenylsulfon

Beispiel 2.7 Umsetzungen von Mischungen von Primaset® PT30 und Primaset® LeCy mit Bishydroxyphenylsulfid
Beispiel 2.8 Umsetzung von Mischungen von Primaset® PT30 und Primaset® LeCy mit Bisphenol A
Beispiel 2.9 Umsetzung von Mischungen von Primaset® PT30 und Primaset® LeCy mit Bishydroxyphenylsulfon
Beispiel 2.10 Umsetzung von Mischungen der oben genannten Harze mit Primaset® BADCy mit Bishydroxyphenylsulfid
Beispiel 2.11 Umsetzung von Mischungen der oben genanntenHarze mit Primaset® BADCy mit Bisphenol A
Beispiel 2.12 Umsetzung von Mischungen der oben genanntenHarze mit Primaset® BADCy und mit den oben genannten Bisphenolen

Das Vorgehen der Verarbeitung entspricht der unter 1 beschriebenen Arbeitsweise. Die Cyanat-Ester-Komponenten werden separat gelöst und anschließend mit der Bisphenol-Lösung vereinigt. Die Massenanteile entsprechen den unter 1 beschriebenen. Die Verhältnisse der Cyanat-Ester-Komponenten können im sich ergeben restlichen Bereich über die gesamte Bandbreite gewählt werden.

### Beispielgruppe 3

Umsetzung von Cyanat-Ester-Harzen mit reaktiven organischen Phosphorverbindungen als Flammschutzmittel auf Basis der Formel (VI) zur Verbesserung der Flammfestigkeit, einsetzbar in den Prepolymeren der vorliegenden Erfindung.

Beispiel 3.1 Umsetzung von Primaset® PT15 mit einem Bis(hydroxyphosphinat) der nachstehenden Formel VII:

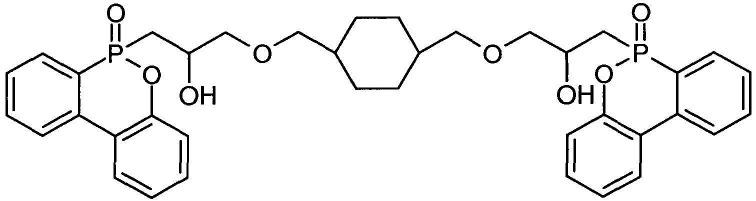

Das Bis(hydroxyphosphinat) wurde wie in Beispiel 1.4 der EP 1 544 227 A1 beschrieben hergestellt.
Beispiel 3.2 Umsetzung von Primaset® PT30 mit einem Bis(hydroxyphosphinat) der nachstehenden Formel VIII:

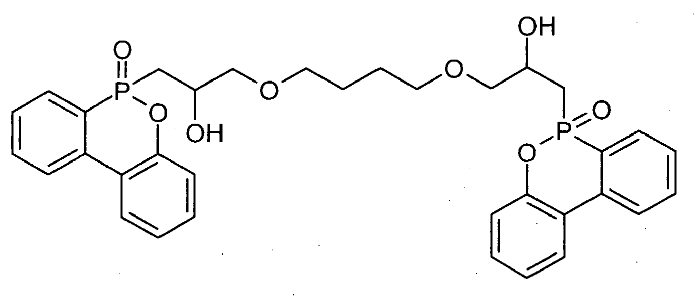

Das Bis(hydroxyphosphinat) wurde wie in Beispiel 1.1 der EP 1 544 227 A1 beschrieben hergestellt.
Beispiel 3.3 Umsetzung von Primaset® LeCy mit dem Bis(hydroxyphosphinat) der voranstehenden Formel (VII)
Beispiel 3.4 Umsetzung von Primaset® BADCy mit dem Bis(hydroxyphosphinat) der voranstehenden Formel (VIII)
Beispiel 3.5 Umsetzung von Mischungen beliebiger Mitglieder der Gruppe, bestehend aus Primaset® PT15, -PT30, -LeCy , -BADCy, mit dem Bis(hydroxyphosphinat) der voranstehenden Formel (VII)
Beispiel 3.6 Umsetzung von Mischungen beliebiger Mitglieder der Gruppe, bestehend aus Primaset® PT15, -PT30, -LeCy , -BADCy, mit dem Bis(hydroxyphosphinat) der voranstehenden Formel (VIII)

Die Harzkomponente bzw. -komponenten werden aufgeschmolzen, und in die Schmelze wird langsam unter ständigem Rühren das Bis(hydroxyphosphinat) der Formel (VII) oder (VIII) zugegeben. Das Bis(hydroxyphosphinat) schmilzt ebenfalls auf und die Schmelzen werden durch Rühren vermischt.

Mit dieser Schmelze kann ein Substrat beschichtet werden. Das Substrat kann ebenfalls im Bereich von 80-130°C prepolymerisiert werden. Das prepolymeriserte Harz befindet sich unterhalb des Gelpunkts und kann erneut aufgeschmolzen und einer Formgebung zugeführt werden. Durch Kühlung ist eine Lagerung möglich. Zur Endverarbeitung kann ebenfalls eine Temperatur von 160°C bei einer Presszeit von 800s gewählt werden.

### Beispielgruppe 4 - allgemein

Einarbeitung von Hilfsstoffen zum Erzielen verbesserter Oberflächen im gehärteten Zustand, ohne Verlust an Brandfestigkeit für die Harzmischungen der Beispielgruppen 1,2 und 3
- Beispiel 4.1: Einarbeitung von pyrogener bzw. hochdisperser Kieselsäure
- Beispiel 4.2: Einarbeitung von natürlichem und/oder synthetischem quellfähigem Schichtsilikat, insbesondere auf Basis des Montmorillonit-Typs
- Beispiel 4.3: Einarbeitung von Montmorillonit wie in Beispiel 4.2, der jedoch zusätzlich organisch modifiziert ist,
- Beispiel 4.4: Einarbeitung von anorganischem, phosphathaltigem Flammschutzmittel
- Beispiel 4.5: Einarbeitung von DOPOform als Flammschutzmittel
- Beispiel 4.6: Einarbeitung eines Hydroxyphosphinats der nachstehenden Formel 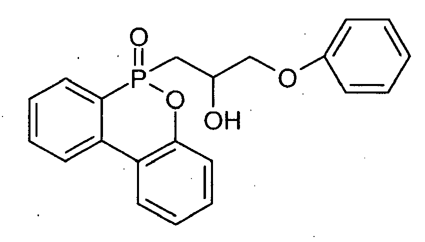 als Flammschutzmittel
- Beispiel 4.7: Einarbeitung von Kombinationen aus den Beispielen 4.1 bis 4.6

Die Einarbeitung der Hilfsstoffe erfolgt in die vereinigten Lösungen bzw. Schmelzen, die wie unter 1, 2 und 3 beschrieben hergestellt wurden, unter Verwendung von Dispergiergeräten. Der zugegebene Anteil der Hilfsstoffe kann vorzugsweise in der Summe bis zu 20 Ma-% betragen, bei Zusatz eines einzigen Füllstoffs liegt er vorzugsweise bei maximal ca. 10 Ma-%.

### Beispielgruppe 5

### A Herstellung von Probekörpern

Zur Herstellung der Probekörper werden das entsprechende Cyanatharz und das Bisphenol wie in der Beispielgruppe 1, der Beispielgruppe 2 oder in der Beispielgruppe 3 beschrieben getrennt zur Schmelze gebracht und sodann vermischt oder gemeinsam in einen Glaskolben eingewogen und in der Regel bei etwa 120°C aufgeschmolzen. Im Falle der Verwendung von Bis(hydroxyphosphinaten) der Formel (VII) oder (VIII) als Comonomer werden diese langsam in die auf ca. 140°C erwärmte Harzschmelze unter Rühren zugegeben. Für Cyanatharz-Mischungen mit Füllstoffen werden diese nachfolgend in der Schmelze dispergiert, wie für die Beispielsgruppe 4 beschrieben. Anschließend wird die entstandene Schmelze unter Vakuum entgast und in eine Gießform gegossen, welche auf die vorgesehene Härtungstemperatur vorgeheizt ist. Das Harz bzw. die Mischung wird sodann in der Gießform im Wärmeschrank nach dem gewünschten Härtungsregime ausgehärtet.

### B Spezielle Beispiele für Probekörper

### Beispiel 5.1

5.57g Primaset® BADCy (Lonza) werden aufgeschmolzen und auf 140°C erwärmt. In die Flüssigkeit werden 1.07g 4,4'-Dihydroxybenzophenon (vorgemischt mit 0,05% Cobalt(III)acetylacetonat) gegeben und die Mischung ca. 10min unter Vakuum entgast. Das so erhaltene Prepolymer weist eine Lagerstabilität von >3 Wochen bei Raumtemperatur auf. Anschließend wird die Mischung in eine auf 100°C vorgewärmte Gießform gegossen und im Wärmeschrank nach folgendem Heizregime gehärtet: 15h 160°C, 1 h 180°C. Das resultierende gehärtete Polymer ist gelb, klar und weist eine Glastemperatur Tg=229°C und einen Modul G'= 950MPa (dynamisch mechanische Analyse) auf.

### Beispiel 5.2

5.57g Primaset® BADCy (Lonza) werden aufgeschmolzen und auf 140°C erwärmt. In die Flüssigkeit werden 1.25g Bis-(4-hydroxyphenyl)-sulfid portionsweise gegeben (vorgemischt mit 0,04% Chrom(III)acetylacetonat), und die Mischung wird ca. 30min bei 160°C gerührt und danach 10min unter Vakuum entgast. Das so erhaltene Prepolymer weist eine Lagerstabilität von >3 Wochen bei Raumtemperatur auf. Anschließend wird die Mischung in eine auf 120°C vorgewärmte Gießform gegossen und im Wärmeschrank nach folgendem Heizregime gehärtet: 15h 160°C, 1 h 180°C. Das resultierende gehärtete Polymer ist goldbraun, klar und weist eine Glastemperatur Tg=237°C und einen Modul G'= 1110 MPa (dynamisch mechanische Analyse) auf.

### Beispiel 5.3

5.62g Primaset® LeCy (Lonza) werden entgast und auf 70°C erwärmt. In die Flüssigkeit werden 0.82g Bis-(4-hydroxyphenyl)-sulfid portionsweise gegeben (vorgemischt mit 0,04% Chrom(III)acetylacetonat), und die Mischung wird ca. 30min bei 70°C gerührt und danach 10min unter Vakuum entgast. Das so erhaltene Prepolymer weist eine Lagerstabilität von >3 Wochen bei Raumtemperatur auf. Anschließend wird die Mischung in eine auf 70°C vorgewärmte Gießform gegossen und im Wärmeschrank nach folgendem Heizregime gehärtet: 1 h 120°C, 2h 140°C, 1 h 160°C. Das resultierende gehärtete Polymer ist gelb, klar und weist eine Glastemperatur Tg=197°C und einen Modul G'= 990 MPa (dynamisch mechanische Analyse) sowie thermische Ausdehnungskoeffizienten von 54 ppm/K unterhalb und 163 ppm/K oberhalb der Glastemperatur (thermomechanische Analyse) auf. Bei 403°C zeigt das Polymer einen Masseverlust von 10% unter Luft (Thermogravimetrie).

### Beispiel 5.4

4.756g Primaset® LeCy (Lonza) werden entgast und auf 70°C erwärmt. In die Flüssigkeit werden 0.436g Bis-(4-hydroxyphenyl)-sulfid portionsweise (vorgemischt mit 0,04% Chrom(III)acetyl-acetonat) gegeben, und die Mischung wird ca. 30min bei 70°C gerührt und danach 10min unter Vakuum entgast. Das so erhaltene Prepolymer weist eine Lagerstabilität von >3 Wochen bei Raumtemperatur auf. Anschließend wird die Mischung in eine auf 70°C vorgewärmte Gießform gegossen und im Wärmeschrank nach folgendem Heizregime gehärtet: 2h 100°C, 2h 120°C, 2h 140°C, 1 h 160°C. Das resultierende gehärtete Polymer ist gelb, klar und weist eine Glastemperatur Tg=222°C und einen Modul G'= 1010 MPa (dynamisch mechanische Analyse) auf.

### Beispiel 5.5

65g Primaset® PT15 (Lonza), 25g Primaset® LeCy (Lonza) und 10g Bisphenol A werden in einem Kolben eingewogen und bei 120 aufgeschmolzen. Die Schmelze wird anschließend unter Vakuum entgast. In die entgaste Mischung wird portionsweise 2Teile Aerosil (Degussa) und/oder 2,5Teile Nanofil 2 (Südchemie) und/oder 10Teile SLM P52 (Wacker) und/oder 8,8Teile Exolit OP 930 zugegeben und unter Verwendung eines Dipergier-Rührers in die Mischung eingearbeitet. Die Mischung wird anschließend in eine auf 140°C vorgeheizte Gießform gegeben und nach folgendem Regime ausgehärtet: 6h bei 140°C, 1 h bei 250°C. Das resultierende Polymer ist gelblich, undurchsichtig, weist eine Glastemperatur von 217°C auf und lässt sich auf eine gemittelte Rauhtiefe von Rz=0,033 µm polieren.

### Beispiel 5.6

90g BADCy und 10g Bishydroxyphenylsulfon werden in einem Kolben eingewogen und bei 120°C aufgeschmolzen. Die Mischung wir anschließend unter Vakuum entgast und in eine vorgeheizte Gießform gegeben. Die Härtung erfolgt nach folgendem Regime: Aufheizen von 50°c bis 120°C in 3h, 2h bei 120°C, Aufheizen auf 180°C in 1 h, 2h 180°C. Das resultierende Polymer weist eine Glastemperatur von 205°C und einen Modul G' von 1470MPa auf.

### Beispiel 5.7

92g Primaset® BADCy (Lonza) werden auf 140°C erwärmt und aufgeschmolzen. In die Schmelze werden 11,0g des oben genannten Bis(hydroxyphosphinat)s mit der Formel (VIII) langsam unter ständigem Rühren zugegeben. Nachdem das Bis(hydroxyphosphinat) sich vollständig in der BADCy-Schmelze gelöst hat, wird die Mischung 10min unter Vakuum entgast. Die Mischung wird anschließend in ein auf 140°C vorgewärmte Gießform gegeben und im Wärmeschrank mit folgendem Härteregime ausgehärtet: 6h bei 140°C, 1 h bei 250°C. Das resultierende Polymer ist orange klar und weist eine Glastemperatur von Tg=268°C auf.

### Beispiel 5.8

90g BADCy und 10g Bisphenol A werden in einem Kolben eingewogen und bei 120°C aufgeschmolzen und anschließend unter Vakuum entgast. In diese Mischung wird 6,5 g Exolit AP 422 (Clariant) zugegeben und unter Rühren eingearbeitet. Die Mischung wird in eine vorgeheizte Form gegeben und nach folgendem Regime gehärtet: 6h 140°C, 1 h 250°C.

Die Brandeigenschaften dieses Polymers sind im Vergleich zu einer Reinharzplatte aus BADCy und Bisphenol A weiter unten dargestellt.

### C Eigenschaften von Probekörpern

Die nachstehende Tabelle I gibt Mindesttemperaturprofile für die Härtung von mit Bisphenol A modifizierten Cyanatesterharzen an, welche eine akzeptable Bruchzähigkeit ergeben und im prepolymerisierten Zustand bei Raumtemperatur eine Lagerstabilität von mind. 3 Wochen aufweisen. Zum Vergleich sind entsprechende Daten von unmodifizierten Cyanatesterharzen angegeben.

**Tabelle I**

| Cyanat | Phenol | Verhältnis [%] | K1c | Härtungsregime [°C-h] |
|---|---|---|---|---|
| BADCy | - | 100 | 0,2 | 180-30 |
| | | | 0,54 | 220-2 + 200-2 + 180-.30 |
| BADCy | Bisphenol A | 85/15 | n. meßbar | 140-2 |
| | | | 1,06 | 140-6 |
| PT15 | - | 100 | <0,27 | 160-6 |
| | | | 0,5 | 160-20 |
| PT15 | Bisphenol A | 85/15 | <0,37 | 130-2 |
| | | | 0,68 | 140-2 |
| PT30 | - | 100 | n. meßbar | 160-8 |
| | | | 0,435 | 160-20 |
| PT30 | Bisphenol A | 85/15 | n. meßbar | 110-2 |
| | | | 0,435 | 130-2 |
| XU366 | - | 100 | 0,2 | 180-8 |
| | | | 1,08 | 180-16 + 160-4 |
| XU366 | Bisphenol A | 85/15 | n. meßbar | 100-2 |
| | | | 1 | 130-1 |

| | | | | |
|---|---|---|---|---|
| Abkürzungen: K1c = kritischer Spannungsintensitätsfaktor in Modus 1 (Modus 1 = Zugbeanspruchung) | | | | |

In der nachstehenden Tabelle II sind die Brandeigenschaften von dreien der in Tabelle I aufgeführten Harz-Paaren (unmodifiziert/modifiziert) angegeben.

**Tabelle II**

| Substanzen | Entz. [s] | HRRpeak [kW/m²] | HRR300 [kW/m²] | THR300 [MJ/m²] | TSR [m²/m²] | Härtung [°C-h] |
|---|---|---|---|---|---|---|
| PT15 | 72 | 195 | 52 | 16 | 320 | 200-4 + 180-4 + 160-4 |
| PT15+BA 85/15 | 61 | 243 | 88 | 26,7 | 667 | 140-2 |
| PT30 | 64 | 274 | 137 | 42,11 | 956 | 200-4 + 180-4 + 160-4 |
| PT30+BA 85/15 | 80 | 278 | 92 | 28,5 | 808 | 130-2 |
| XU366 | 84 | 254 | 138 | 41,8 | 1972 | 180-16 + 160-4 |
| XU366+BA 85/15 | 59 | 305 | 150,3 | 45,6 | 2079 | 160-6 |

| | | | | | | |
|---|---|---|---|---|---|---|
| Abkürzungen: BA = Bisphenol A Entz. = Entzündungszeit HRRpeak = Heat Release Rate peak (Maximale Wärmefreisetzungsrate) HRR300 = Wärmefreisetzungsrate über 300 sec. THR300 = Total heat released (Gesamt-Wärmefreisetzung innerhalb 300 sec. TSR = Total smoke released (Gesamt-Rauchgasfreisetzung) | | | | | | |

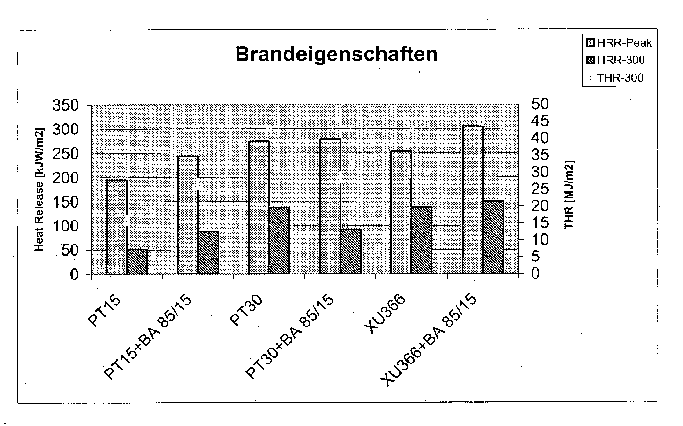

Die Brandeigenschaften der Substanzen aus Tabelle II sind in Figur 1 graphisch dargestellt.

In der nachstehenden Tabelle III ist die Verbesserung der Brandeigenschaften eines mit Exolit AP 422 modifizierten Harzes aus BADCy und Bisphenol A im Vergleich zum reinen Harz dargestellt.

**Tabelle III**

| Substanzen | Entz. [s] | HRRpeak [kW/m²] | HRR300 [kW/m²] | TSR [m2/m²] |
|---|---|---|---|---|
| BADCy+BisphenolA+Exolit (90+10+6,5 Teile) | 125 | 203 | 133 | 4265 |
| BADCy+BisphenolA | 65 | 259 | 125 | 2586 |

In der nachstehenden Tabelle IV sind die Glasübergangstemperaturen (Tg) und der Modul G' der Umsetzungen von BADCy mit Bishydroxyphenylsulfon beschrieben.

**Tabelle IV**

| Substanzen | Härtung | Tg [°C] | G'[MPa] |
|---|---|---|---|
| BADCy+BHPS 90+10 | 50 bis 120°C in 3h, 2h 120°C | 151 | 1600 |
| BADCy+BHPS 90+10 | 50 bis 120°C in 3h, 2h 120°C, in 1h auf 180°C, 2h 180°C | 185 | 1540 |
| BADCy+BHPS 95+5 | 50 bis 120°C in 3h, 2h 120°C | 152 | 1560 |
| BADCy+BHPS 95+5 | 50 bis 120°C in 3h, 2h 120°C, in 1h auf 180°C, 2h 180°C | 205 | 1470 |

| | | | |
|---|---|---|---|
| Abkürzungen: BHPS = Bishydroxyphenylsulfon | | | |

## Patentansprüche

1. Prepolymer, hergestellt unter Verwendung
(a) mindestens eines di- oder polyfunktionellen organischen Cyanats und
(b) mindestens eines di- oder polyfunktionellen aromatischen Alkohols in Mengenanteilen, die ein molares Verhältnis der OCN-Gruppen
zu OH-Gruppen in den Ausgangsmaterialien zur Herstellung des Prepolymeren zwischen 95:5 und 70:30 gewährleisten, sowie ggf. mindestens eines Füllstoffs, wobei das Prepolymer in einem Vernetzungsgrad vorliegt, der unter seinem Gelpunkt liegt,
wobei der mindestens eine di- oder polyfunktionelle aromatische Alkohol ausgewählt ist unter Verbindungen der nachstehenden Strukturen Ia bis IIIa, 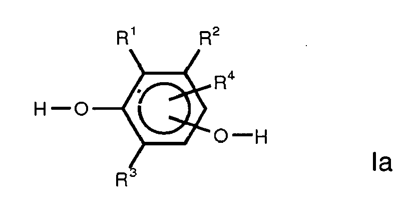 worin R¹ bis R⁴ unabhängig voneinander Wasserstoff, geradkettiges oder verzweigtes C₁-C₁₀-Alkyl, C₃-C₈-Cycloalkyl, C₁-C₁₀-Alkoxy, Halogen, Phenyl oder Phenoxy ist, wobei die Alkyl- oder Arylgruppen fluoriert oder teilfluoriert sein können, 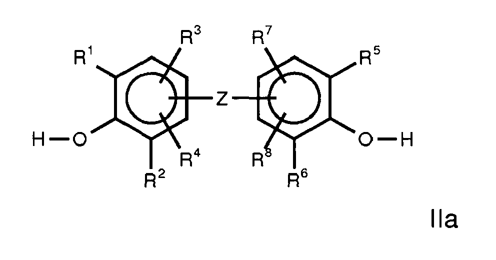 worin R⁵ bis R⁸ wie R¹ bis R⁴ sind und Z eine chemische Bindung, SO₂, CF₂, CH₂, CHF, CH(CH₃), Isopropylen, Hexafluoroisopropylen, C₁-C₁₀-Alkylen, O, NR⁹, N=N, CH=CH, COO, CH=N, CH=N-N=CH, Alkylenoxyalkylen mit C₁-C₈-Alkylen, S, Si(CH₃)₂, 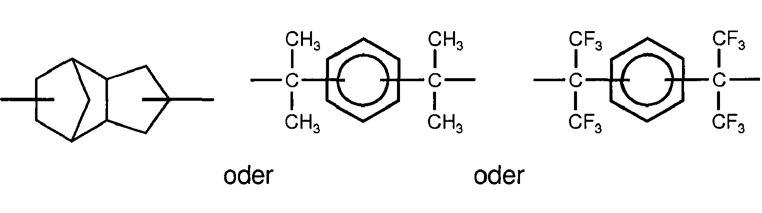 ist, 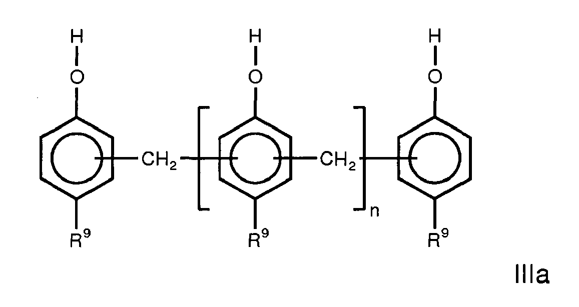 worin R⁹ Wasserstoff oder C₁-C₁₀-Alkyl ist und n einen Wert von 0 bis 20 darstellt, mit Ausnahme eines Prepolymeren, hergestellt aus dem Dicyanat-Derivat von Bisphenol A und entweder Bisphenol A oder einem bromierten Derivat davon oder 4,4'-Thiodiphenol (TDP), sofern das Prepolymer keine weiteren Komponenten enthält.

2. Prepolymer nach Anspruch 1, wobei das di- oder polyfunktionelle organische Cyanat oder eines dieser Cyanate ausgewählt ist unter aromatischen Cyanaten und vorzugsweise unter Cyanaten der Formeln I bis III: 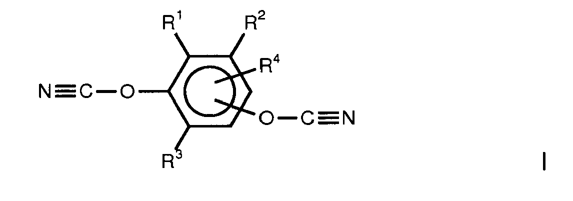 worin R¹ bis R⁴ unabhängig voneinander Wasserstoff, geradkettiges oder verzweigtes C₁-C₁₀-Alkyl, C₃-C₈-Cycloalkyl, C₁-C₁₀-Alkoxy, Halogen, Phenyl oder Phenoxy ist, wobei die Alkyl- oder Arylgruppen fluoriert oder teilfluoriert sein können, 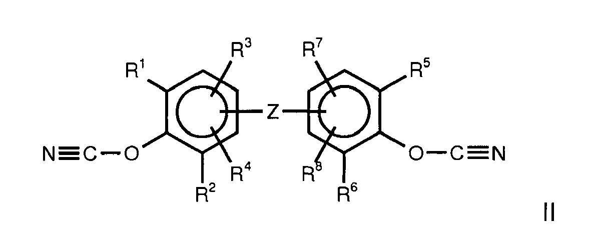 worin R⁵ bis R⁸ wie R¹ bis R⁴ sind und Z eine chemische Bindung, SO₂, CF₂, CH₂, CHF, CH(CH₃), Isopropylen, Hexafluoroisopropylen, C₁-C₁₀-Alkylen, O, NR⁹, N=N, CH=CH, COO, CH=N, CH=N-N=CH, Alkylenoxyalkylen mit C₁-C₈-Alkylen, S, Si(CH₃)₂, 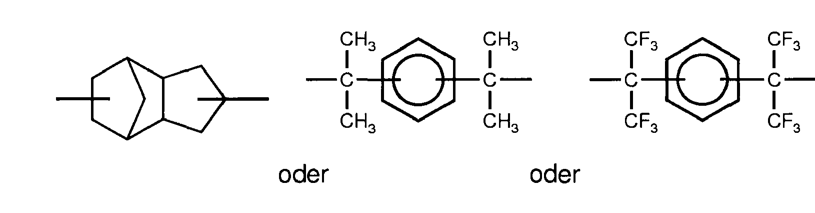 ist, 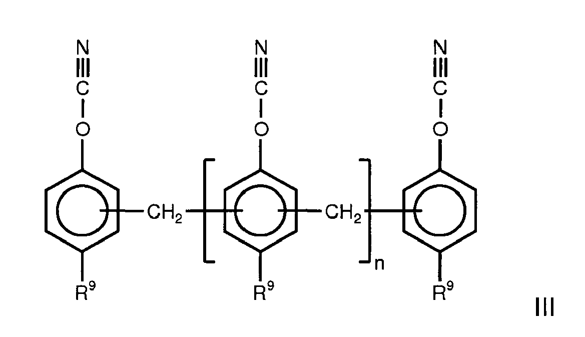 worin R⁹ Wasserstoff oder C₁-C₁₀-Alkyl ist und n einen Wert von 0 bis 20 darstellt,
sowie unter Prepolymeren der vorgenannten Cyanate.

3. Prepolymer nach Anspruch 1 oder 2, **dadurch gekennzeichnet, dass** der di- oder polyfunktionelle aromatische Alkohol oder einer dieser Alkohole ausgewählt ist unter bifunktionellen Phenolen.

4. Prepolymer nach einem der voranstehenden Ansprüche, **dadurch gekennzeichnet, dass** das di- oder polyfunktionelle organische Cyanat oder eines dieser Cyanate ausgewählt ist unter Novolak-Cyanaten, dem Bisphenol A-Dicyanatderivat, 4,4'Ethylidendiphenyldicyanat und Verbindungen mit der Formel III gemäß Anspruch 2, worin n 1, 2 oder 3 ist, R9 Wasserstoff ist und die Methylengruppe jeweils in ortho-Position zur Cyanatgruppe steht und/oder dass der di- oder polyfunktionelle aromatische Alkohol oder einer dieser Alkohole ausgewählt ist unter Bisphenol A und Bishydroxyphenylsulfid.

5. Prepolymer nach einem der voranstehenden Ansprüche, enthaltend mindestens einen Füllstoff, der ausgewählt ist unter Mikrofillern und/oder Nanofillern aus anorganischem, gegebenenfalls organisch modifiziertem und/oder beschichtetem Material.

6. Prepolymer nach einem der voranstehenden Ansprüche, worin der oder mindestens einer der Füllstoffe phosphororganische Bestandteile enthält.

7. Prepolymer nach einem der Ansprüche 5 oder 6, worin der oder mindestens einer der Füllstoffe ausgewählt ist unter Siliciumdioxid, keramischen Materialien, organisch modifizierten Silikonen oder Siloxanen oder Mischungen hiervon.

8. Prepolymer nach einem der Ansprüche 5 bis 7, worin der Füllstoffanteil der Mischung bis zu 30 Masse-%, vorzugsweise bis zu 20 Masse-% und stärker bevorzugt bis zu 15 Masse-% beträgt.

9. Prepolymer nach einem der voranstehenden Ansprüche, worin die Mischung mindestens einen weiteren Zusatz aufweist.

10. Prepolymer nach Anspruch 9, worin der Zusatz ausgewählt ist unter oberflächenmodifizierenden, vorzugsweise die Oberflächenspannung senkenden Mittel.

11. Verfahren zum Herstellen eines Prepolymeren wie in einem der Ansprüche 1 bis 10 beansprucht, **gekennzeichnet durch**:
- Mischen von oder getrenntes oder gemeinsames Lösen von
(a) mindestens einem di- oder polyfunktionellen organischen Cyanat wie in Anspruch 1 definiert und
(b) mindestens einem di- oder polyfunktionellen aromatischen Alkohol wie in Anspruch 1 definiert in Mengenanteilen, die ein molares Verhältnis der OCN-Gruppen zu OH-Gruppen der genannten Materialien zwischen 95:5 und 70:30 gewährleisten, wie in Anspruch 1 definiert, in einem oder in verschiedenen Lösungsmitteln und, sofern das Lösen in getrennten Lösungsmitteln erfolgt,
- anschließendes Zusammengeben der Lösungen.

12. Verfahren nach Anspruch 11, weiterhin umfassend den Schritt des Einarbeitens mindestens eines Füllstoffs in eine, in die (einzige) oder in die vereinigten Lösung(en).

13. Verfahren nach Anspruch 11 oder 12, weiterhin umfassend den Schritt des Einstellens der Viskosität der erhaltenen Lösung durch Abdampfen oder Zugeben von Lösungsmittel.

14. Verfahren nach einem der Ansprüche 11 bis 13, weiterhin umfassend das Überführen der ggf. eingeengten Lösung in eine der Endform nahe kommende Gestalt und Erwärmen und/oder Trocknen der Mischung.

15. Verfahren nach einem der Ansprüche 1 bis 13, weiterhin umfassend das Erwärmen und/oder Trocknen der Lösung in Bulkform.

16. Verfahren nach einem der Ansprüche 11 bis 15, worin das Trocknen zwischen 80 und 200 °C erfolgt.

17. Form- oder Schichtkörper, erhalten durch oder unter Verwendung eines Prepolymeren gemäß einem der Ansprüche 1 bis 10 und Härten desselben unter Einsatz von gegenüber Raumbedingungen erhöhtem Druck und/oder erhöhter Temperatur.

## Claims

1. Prepolymer, prepared under use of
(a) at least one bifunctional or polyfunctional organic cyanate, and
(b) at least one bifunctional or polyfunctional aromatic alcohol in amounts which ensure a molar ratio of OCN groups to OH groups between 95:5 and 70:30 in the starting materials for the preparation of the prepolymer, and optionally at least one filler, wherein the prepolymer has a degree of crosslinking that is below the gel point thereof, wherein the at least one bifunctional or polyfunctional aromatic alcohol is selected under compounds having the subsequently depicted structures la to IIIa, 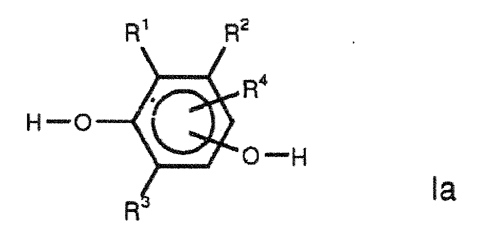 wherein R¹ to R⁴ are, independent from one another, hydrogen, straight-chain or branched C₁ - C₁₀ alkyl, C₃ - C₈ cycloalkyl, C₁ - C₁₀ alkoxy, halogen, phenyl or phenoxy, wherein the alkyl groups or aryl groups can be fluorinated or partially fluorinated; 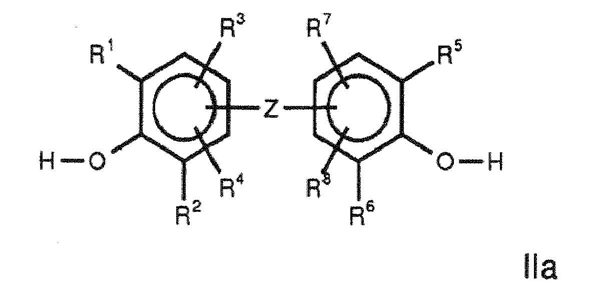 wherein R⁵ to R⁸ are the same as R¹ to R⁴ and Z is a chemical bond, SO₂, CF₂, CH₂, CHF, CH(CH₃), isopropylene, hexafluoro isopropylene, C₁ - C₁₀ alkylene, O, NR⁹, N=N, CH=CH, COO, CH=N, CH=N-N=CH, alkylene oxyalkylene with C₁ - C₈ alkylene, S, Si(CH₃)₂, 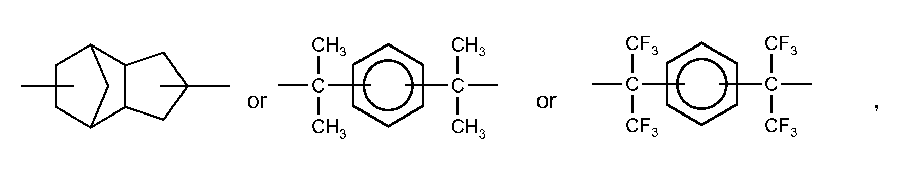 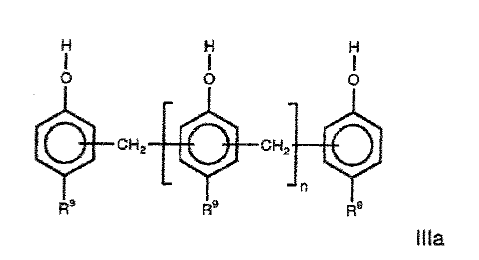 wherein R⁸ is hydrogen or C₁ - C₁₀ alkyl and n is an integer of 0 to 20, with the exception of a prepolymer, prepared from the dicyanate derivative of bisphenol A and either bisphenol A or a brominated derivative thereof or 4,4'-thiodiphenol (TDP), as far as the prepolymer does not contain any additional components.

2. Prepolymer according to claim 1, wherein the bifunctional or polyfunctional organic cyanate or one of said cyanates is selected under aromatic cyanates and preferably under cyanates of the formulae I to III: 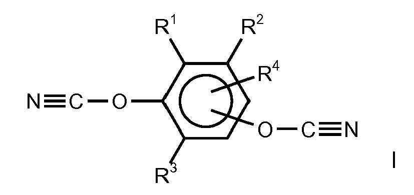 wherein R¹ to R⁴ are, independent from one another, hydrogen, straight-chain or branched C₁ - C₁₀ alkyl, C₃ - C₈ cycloalkyl, C₁ - C₁₀ alkoxy, halogen, phenyl or phenoxy, wherein the alkyl groups or aryl groups can be fluorinated or partially fluorinated; 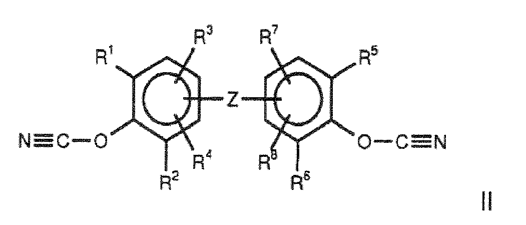 wherein R⁵ to R⁸ are the same as R¹ to R⁴ and Z is a chemical bond, SO₂, CF₂, CH₂, CHF, CH(CH₃), isopropylene, hexafluoro isopropylene, C₁ - C₁₀ alkylene, O, NR⁹, N=N, CH=CH, COO, CH=N, CH=N-N=CH, alkylene oxyalkylene with C₁ - C₈ alkylene, S, Si(CH₃)₂, 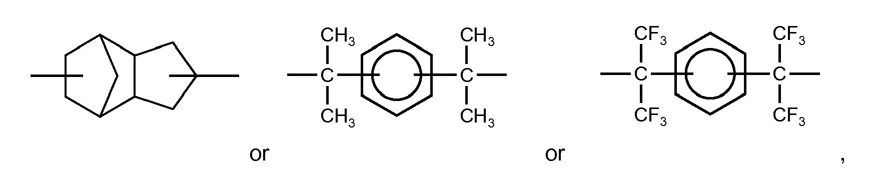 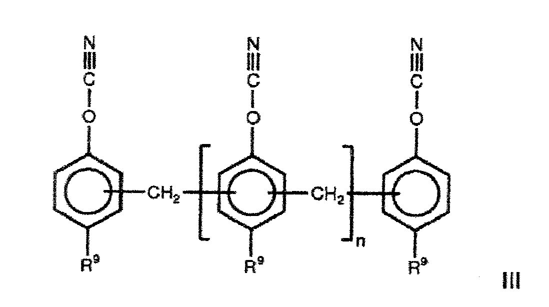 wherein R⁹ is hydrogen or C₁ - C₁₀ alkyl and n is an integer of 0 to 20,
as well as under prepolymers of the above mentioned cyanates.

3. Prepolymer according to claim 1 or 2, **characterized in that** the bifunctional or polyfunctional aromatic alcohol or one of the said alcohols is selected under bifunctional or polyfunctional phenols.

4. Prepolymer according to any of the preceding claims, **characterized in that** the bifunctional or polyfunctional organic cyanate or one of the said cyanates is selected under novolac cyanates, the bisphenol A dicyanate derivative, 4,4'-ethylidene diphenyl dicyanate and compounds of the structural formula III according to claim 2 wherein n is 1, 2, or 3, R⁹ is hydrogen, and each of the methylene group is in ortho position relative to the cyanate group and/or that the bifunctional or polyfunctional aromatic alcohol or one of the said alcohols is selected under bisphenol A and bishydroxy phenyl sulfide.

5. Prepolymer according to any of the preceding claims, comprising at least one filler which is selected from microfillers and/or nanofillers of anorganic, optionally organically modified and/or coated material.

6. Prepolymer according to any of the preceding claims, wherein the or at least one of said fillers contains organophosphorus components.

7. Prepolymer according to any of claims 5 or 6, wherein the or at least one of said fillers is selected from silicon dioxide, ceramic materials, organically modified silicones or siloxanes or mixtures thereof.

8. Prepolymer according to any of claims 5 to 7, wherein the filler is present in a quantity of up to 30 percent by weight, preferred up to 20 percent by weight, and more preferred up to 15 percent by weight of the mixture.

9. Prepolymer according to any of the preceding claims, wherein the mixture comprises at least one further additive.

10. Prepolymer according to claim 9, wherein the additive is selected under surface-modifying, preferably the surface tension reducing agents.

11. Method for preparing a prepolymer according to any of claims 1 to 10, **characterized by**
- mixing or separately dissolving or jointly dissolving
(a) at least one bifunctional or polyfunctional organic cyanate as defined in claim 1 and
(b) at least one bifunctional or polyfunctional aromatic alcohol as claimed in claim 1 in a weight ratio ensuring a molar ratio of the OCN groups to the OH groups between 95:5 and 70:30, as claimed in claim 1, in one or in different solvents and as far as dissolution is performed in different solvents,
- subsequent combining the solutions.

12. Method according to claim 11, further comprising the step of incorporating at least one filler into one, into the only one or into the combined solution(s).

13. Method according to claim 11 or 12, further comprising the step of adjusting the viscosity of the obtained solution, by evaporating solvent or adding solvent.

14. Method according to any of claims 11 to 13, further comprising the step of converting the optionally concentrated solution into a form that is close to the final form, and heating and/or drying the mixture.

15. Method according to any of claims 11 to 13, further comprising the heating and/or drying of the solution into bulk form.

16. Method according to any of claims 11 to 15, wherein the drying is performed between 80 and 200°C.

17. Molded body or layered body, obtained by or using a prepolymer according to any of claims 1 to 10 and curing same using a pressure greater than that of ambient conditions and/or a temperature higher than that of ambient conditions.

## Revendications

1. Prépolymère préparé en utilisant :
(a) au moins un cyanate organique bi- ou polyfonctionnel et
(b) au moins un alcool aromatique bi- ou polyfonctionnel dans des proportions garantissant un rapport molaire groupes OCN/groupes OH dans les produits de départ pour préparer le prépolymère qui est compris entre 95/5 et 70/30 ainsi que, le cas échéant, au moins une charge, le prépolymère ayant un degré de réticulation se situant sous son point de gel,
le au moins un alcool aromatique bi- ou polyfonctionnel étant choisi parmi les composés présentant les structures la à IIIa suivantes : 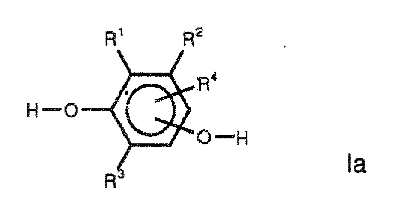 dans laquelle R¹ à R⁴, indépendamment les uns des autres, représentent un atome d'hydrogène, un groupe alkyle en C₁-C₁₀ linéaire ou ramifié, un groupe cycloalkyle en C₃-C₈, un groupe alcoxy en C₁-C₁₀, un atome d'halogène, un groupe phényle ou phénoxy, les groupes alkyle ou aryle pouvant être fluorés ou partiellement fluorés, 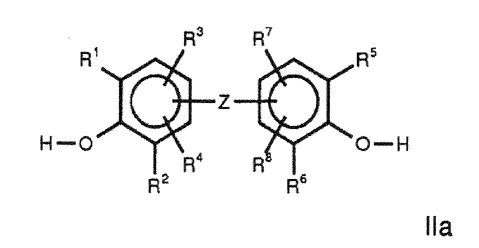 dans laquelle R⁵ à R⁸ sont identiques à R¹ à R⁴ et Z est une liaison chimique, SO₂, CF₂, CH₂, CHF, CH(CH₃), un groupe isopropylène, un groupe hexafluoroisopropylène, un groupe alkylène en C₁-C₁₀, O, NR⁹, N=N, CH=CH, COO, CH=N, CH=N-N=CH, un groupe alkylènoxyalkylène ayant un groupe alkylène en C₁-C₈, S, Si(CH₃)₂, 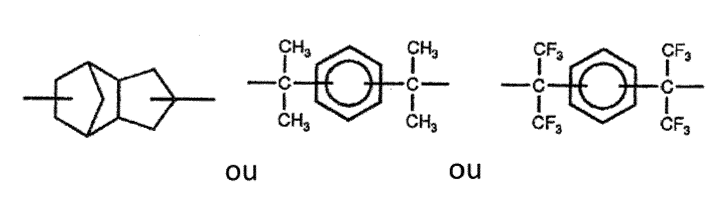 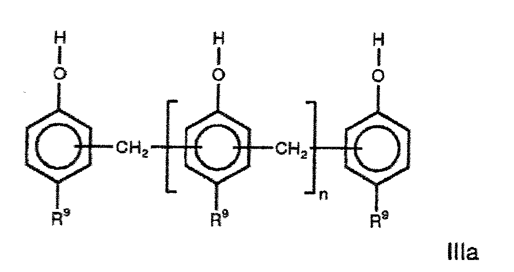 dans laquelle R⁹ est un atome d'hydrogène ou un groupe alkyle en C₁-C₁₀ et n représente une valeur de 0 à 20, à l'exception d'un prépolymère, préparé à partir du dérivé dicyanate du bisphénol A et du bisphénol A ou de l'un de ses dérivés bromés ou bien du 4,4'-thiodiphénol (TDP), à condition que le prépolymère ne contienne aucun autre composant.

2. Prépolymère selon la revendication 1, dans lequel le cyanate organique bi- ou polyfonctionnel ou l'un de ses cyanates est choisi parmi les cyanates aromatiques et de préférence, parmi les cyanates de formules I à III : 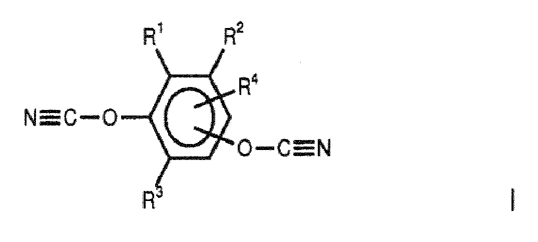 dans laquelle R¹ à R⁴, indépendamment les uns des autres, représentent un atome d'hydrogène, un groupe alkyle en C₁-C₁₀ linéaire ou ramifié, un groupe cycloalkyle en C₃-C₈, un groupe alcoxy en C₁-C₁₀, un atome d'halogène, un groupe phényle ou phénoxy, les groupes alkyle ou aryle pouvant être fluorés ou partiellement fluorés, 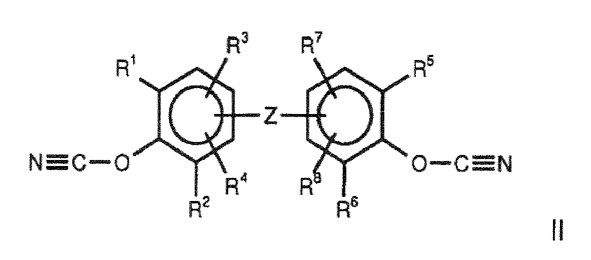 dans laquelle R⁵ à R⁸ sont identiques à R¹ à R⁴ et Z est une liaison chimique, SO₂, CF₂, CH₂, CHF, CH(CH₃), un groupe isopropylène, un groupe hexafluoroisopropylène, un groupe alkylène en C₁-C₁₀, O, NR⁹, N=N, CH=CH, COO, CH=N, CH=N-N=CH, un groupe alkylènoxyalkylène ayant un groupe alkylène en C₁-C₈, S, Si(CH₃)₂, 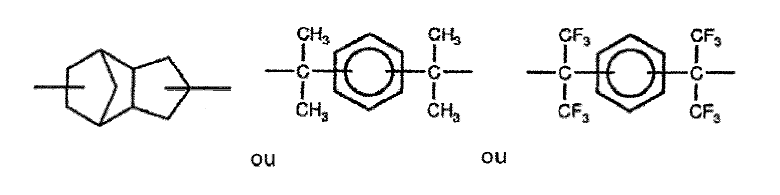 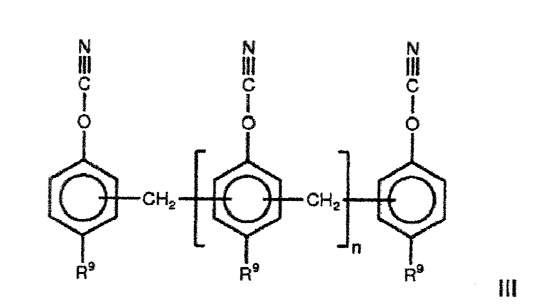 dans laquelle R⁹ est un atome d'hydrogène ou un groupe alkyle en C₁-C₁₀ et n représente une valeur de 0 à 20,
ainsi que parmi les prépolymères desdits cyanates.

3. Prépolymère selon la revendication 1 ou 2, **caractérisé en ce que** l'alcool aromatique bi- ou polyfonctionnel ou l'un de ces alcools est choisi parmi les phénols bifonctionnels.

4. Prépolymère selon l'une quelconque des revendications précédentes, **caractérisé en ce que** le cyanate organique bi- ou polyfonctionnel ou l'un de ces cyanates est choisi parmi les cyanates de novolaque, le dérivé dicyanate du bisphénol A, le 4,4'-éthylidènediphényldicyanate et les composés de formule III selon la revendication 2, n valant 1, 2 ou 3, R⁹ représentant un atome d'hydrogène et le groupe méthyle se situant respectivement en position ortho par rapport au groupe cyanate et/ou **en ce que** l'alcool aromatique bi- ou polyfonctionnel ou l'un de ces alcools est choisi parmi le bisphénol A et le bis(hydroxyphényl)sulfure.

5. Prépolymère selon l'une quelconque des revendications précédentes, contenant au moins une charge choisie parmi les microcharges et/ou les nanocharges issues de matériau inorganique, le cas échéant organiquement modifié et/ou revêtu.

6. Prépolymère selon l'une quelconque des revendications précédentes, dans lequel la au moins une charge contient des composants organophosphorés.

7. Prépolymère selon l'une des revendications 5 ou 6, dans lequel la au moins une charge est choisie parmi le dioxyde de silicium, les matériaux céramiques, les silicones ou les siloxanes organiquement modifiés ou des mélanges de ceux-ci.

8. Prépolymère selon l'une des revendications 5 à 7, dans lequel la proportion de charge du mélange s'élève jusqu'à 30 % en masse, de préférence jusqu'à 20 % en masse et de manière plus préférentielle jusqu'à 15 % en masse.

9. Prépolymère selon l'une quelconque des revendications précédentes, dans lequel le mélange présente au moins un autre additif.

10. Prépolymère selon la revendication 9, dans lequel l'additif est choisi parmi un agent modificateur de surface, de préférence un agent abaissant la tension superficielle.

11. Procédé pour préparer un prépolymère selon l'une des revendications 1 à 10, **caractérisé par** :
- le mélange ou la dissolution séparée ou commune de :
(a) au moins un cyanate organique bi- ou polyfonctionnel comme défini dans la revendication 1 et
(b) au moins un alcool aromatique bi- ou polyfonctionnel, comme défini dans la revendication 1, dans des proportions garantissant un rapport molaire groupes OCN/groupes OH desdits produits qui est compris entre 95/5 et 70/30, comme défini dans la revendication 1, dans un ou plusieurs solvants et à condition que la dissolution s'effectue dans des solvants séparés,
- le mélange consécutif des solutions.

12. Procédé selon la revendication 11, comprenant en outre l'étape consistant à incorporer au moins une charge dans une solution, dans la (seule) solution ou dans les solutions réunies.

13. Procédé selon la revendication 11 ou 12, comprenant en outre l'étape consistant à ajuster par évaporation ou addition de solvants la viscosité de la solution obtenue.

14. Procédé selon l'une des revendications 11 à 13, comprenant en outre la transformation de la solution que l'on a fait s'évaporer le cas échéant en une forme s'approchant de la forme finale et le chauffage et/ou le séchage du mélange.

15. Procédé selon l'une des revendications 1 à 13, comprenant en outre le chauffage et/ou le séchage de la solution en vrac.

16. Procédé selon l'une des revendications 11 à 15, dans lequel le séchage s'effectue entre 80 et 200 °C.

17. Corps moulé ou laminé obtenu au moyen d'un ou en utilisant un prépolymère selon l'une des revendications 1 à 10 et son durcissement en utilisant une pression et/ou une température supérieures à celles des conditions ambiantes.
